# EUROPEAN PATENT APPLICATION

(11) **EP 2 177 802 A1**
(43) Date of publication of application: **21.04.2010**
(21) Application number: 09173049.9
(22) Date of filing: 14.10.2009
(51) Int. Cl.: F16K 41/00, F16J 15/18

(54) **Water valve repair**

(30) Priority: 16.10.2008 GB 0818964
(71) Applicant: Balfour Beatty PLC, London SW1V 1LQ (GB)
(72) Inventor: Twell, Edward Richard, Derby, Derbyshire DE21 7BG (GB); Tyagi, Vaibhav, Derby, Derbyshire DE21 7BG (GB)
(74) Representative: Ertl, Nicholas Justin

(57) **Abstract**

A method is provided of repairing a gland valve which comprises a gland plate (16) which covers a gland (12) provided around a valve spindle, with the gland housed in a gland chamber. The method comprises locating a template (20) over the gland plate (16), the template having an alignment bore. The alignment is used bore to create an opening in the gland plate. A sealant is pumped through the opening and into the gland chamber, and the opening is closed.

This method avoids the need for any excavation around the valve. The template ensures the drilling is in the correct direction (i.e. perpendicular to the surface of the gland plate and in the desired position) so that drilling can be carried out by hand from a distance.

## Description

This invention relates to water valve repair, and particularly the repair of gland-sealed in-line water valves, as are commonly used in the mains water system.

A gland-sealed water valve typically has a gland in the form of a packing rope which provides a seal around the valve spindle. The packing rope is clamped between a top face of the valve body and a gland face which is bolted on top of the valve body. This gland face provides the external outer top surface of the valve.

Over time, the packing rope can deteriorate, and leakage results, which fills the valve chamber and then spills onto the road or pavement. Leaking water valves are common in the water infrastructure, and the packing rope is the most common cause.

Currently, the repair of a leaking valve involves the replacement of the packing rope, and this requires dismantling of the valve. To achieve this, excavation around the valve may be required, and the flow across the valve may also have to be interrupted.

There is therefore a need for an improved way of repairing a leaking gland valve.

According to the invention, there is provided a method of repairing a gland valve which comprises a gland plate which covers a gland provided around a valve spindle, with the gland housed in a gland chamber, the method comprising:
locating a template over the gland plate, the template having an alignment bore;
using the alignment bore to create an opening in the gland plate; and
pumping a sealant through the opening and into the gland chamber; and
closing the opening.

This method uses a template to provide a position for drilling which will lead directly to the damaged gland. Sealant is then pumped into the chamber occupied by the gland, in order to provide a seal repair operation. Creating an opening in the gland plate is preferably by drilling, and this can be carried out from directly above. This avoids the need for any excavation around the valve. The template ensures the drilling is in the correct direction (i.e. perpendicular to the surface of the gland plate and in the desired position) so that drilling can be carried out by hand from a distance.

The method also requires no disruption to water flow through the valve. This means that no public notices or signs are required to carry out the work.

Creating an opening can comprise: drilling a pilot hole using the alignment bore to determine the location and direction of the pilot hole; and drilling the opening using the pilot hole as a guide. In this way, the template is only used for a pilot hole, which in turn is used to assist in the drilling of the desired larger diameter opening. The final opening is selected to allow the desired flow of sealant into the gland chamber.

The opening can be tapped to form a threaded opening. This enables a pump nozzle to be fitted to the threaded opening, and a threaded plug can be used to close the opening.

Locating the template over the gland plate can comprise clamping the template around the spindle. The gland chamber is typically symmetric around the spindle, so that the spindle provides a suitable reference point.

The sealant can comprises PTFE. This has very low coefficient of friction to give an excellent repair, and is also safe for use in a water supply application.

The invention also provides a gland valve repair system for a gland valve which comprises a gland plate which covers a gland provided around a valve spindle, the system comprising:
a template having an alignment bore;
means for positioning the template with respect to the gland plate;
a drill fitting for creating an opening in the gland plate through the template alignment bore;
a sealant pumping arrangement; and
a closure for the opening.

This provides a portable and easy to use system for valve repair.

The drill fitting can comprise a pilot hole drill fitting and a larger diameter tapping drill fitting. The sealant pumping arrangement can then comprise a pump nozzle adapted to fit to the threaded opening of the tapping drill fitting and the closure can comprise a screw threaded plug for the opening. The system preferably includes the sealant, such as a PTFE sealant.

An example of the invention will now be described with reference to the accompanying drawings, in which:
Figure 1 shows schematically the top part of a typical gland valve;
Figures 2A and 2B show the drilling steps of an example of method of the invention;
Figures 3A and 3B show the pumping steps of an example of method of the invention; and
Figure 4 shows the top of the valve in perspective view.

The same reference numbers are used in different figures to denote the same components.

The invention provides a valve repair method in which a sealant is pumped into the space occupied by the gland (e.g. packing rope). A template is used to enable accurate drilling from a long distance, thereby avoiding the need to excavate.

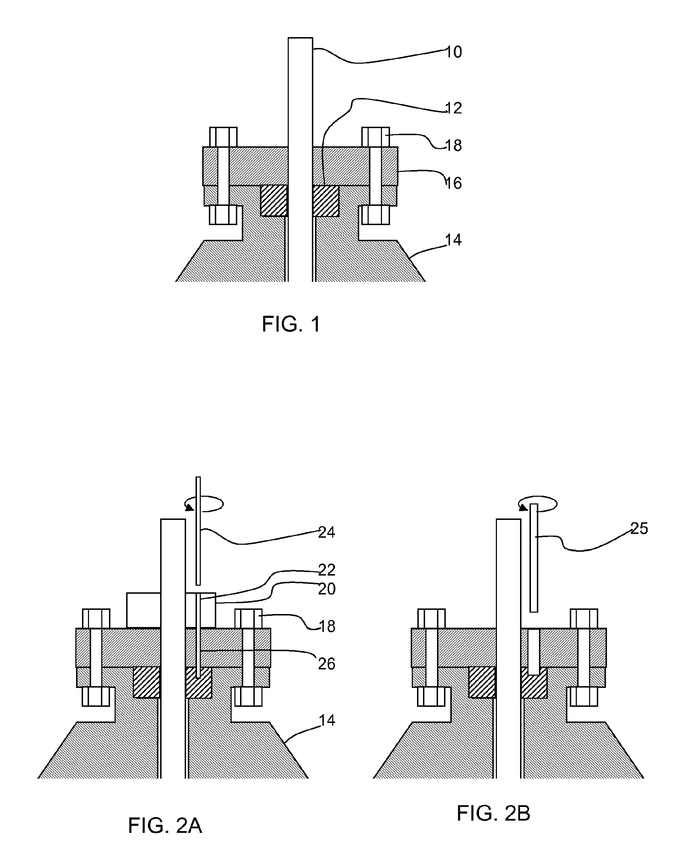

Figure 1 shows the parts of a known gland-sealed water valve which are relevant to this invention. Only the top part of the valve is shown. A valve spindle 10 extends from the top of the valve and is used to control the valve mechanism, which is not shown in Figure 1.

A gland 12 is in the form of a packing rope which provides a seal around the valve spindle 10. The packing rope is clamped between a top face of the valve body 14 and a gland face 16 which is bolted on top of the valve body by bolts 18. This gland face provides the external outer top surface of the valve.

Figures 2A and 2B show the drilling steps of an example of method of the invention.

After removal of the roadside or pavement valve chamber cover, a template 20 is located over the gland plate 16, the template having an alignment bore 22. The template can be secured in position with clamping bolts, with reference to the spindle.

The template is designed for the particular valve type, and the bore 22 is positioned such that it is over a portion of the gland 12. In its simplest form, the template can comprise an annulus which sits over the spindle, and has a hole at a position corresponding to mid-way between the radially inner and outer limits of the gland. Of course any suitable template can be used, providing it can be accurately positioned with respect to the gland plate, whether by means of the spindle or by other means (for example the bolts 18).

A drill 24 is used to create an opening 26 in the gland plate 16, with the position and direction dictated by the bore 22. The opening 26 also extends partially into the gland 12 as shown. The opening functions as a pilot hole for a further drilling operation, as will be explained below.

The drilling can be conducted using an extension piece with a flexible tip (i.e. through an articulation joint), so that the user can be at a distance from the valve, and still perform an accurate drilling operation.

The drilling uses a pilot drill, for example of 4mm diameter (typically 2mm to 8mm diameter). After the pilot hole has been formed, the template is removed.

The pilot hole is then drilled further using the pilot hole as a guide. For example, the desired bore diameter may be in the range 8mm to 15mm, for example 11.5mm. This larger drill 25 is shown in Figure 2B.

The resulting bore is then tapped by a conventional tapping process.

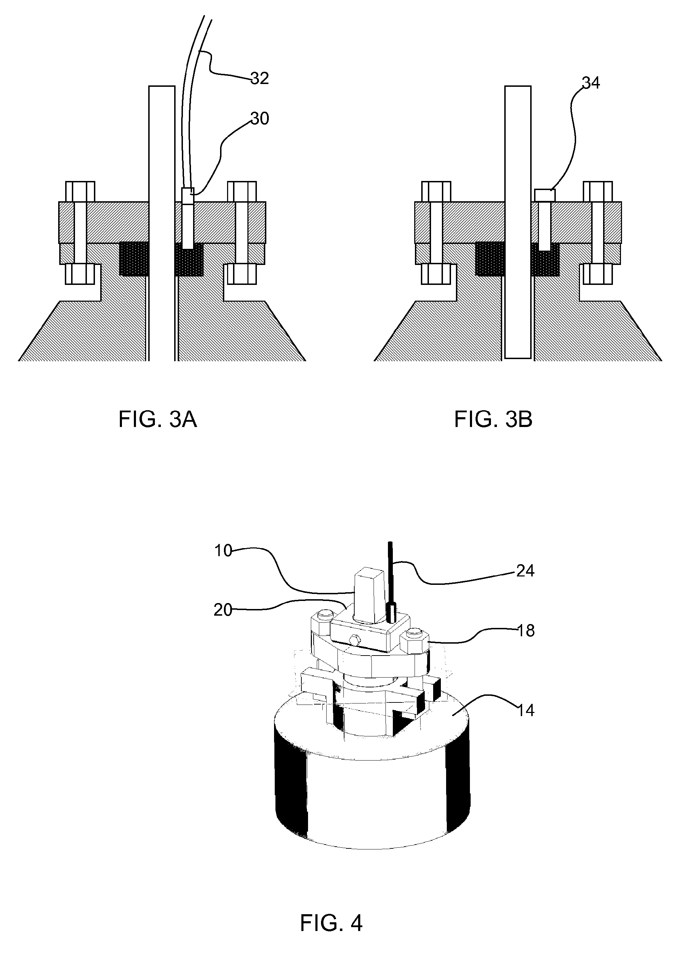

A sealant is then pumped through the opening and into the gland chamber as shown in Figure 3A, in which a pump nozzle 30 is shown fitted to the threaded opening, and leading to a fluid supply line 32. In a preferred arrangement, PTFE is pumped into the gland chamber, which has very low coefficient of friction to give an excellent repair, and is also safe for use in a water supply application.

A threaded plug 34 is then used to close the opening as shown in Figure 3B.

Figure 4 shows the top of the valve in perspective view, at the stage of the process as depicted in Figure 2A.

This method requires no disruption to water flow through the valve.

The apparatus required to implement the repair is simply a template and associated fixing arrangement (or set of templates for different valves), a drill set including the pilot drill, desired bore size drill, tapping set and extension shafts, the sealant and pump and the closure. All of these components are of course standard items and can be easily carried.

The example above relates to the use of the invention for repairing mains water valves, and has particular advantage in this application that it avoids the need to excavate around a valve which is deep in the ground at the base of a narrow chamber. There are other examples of valves buried in chambers, for example in underwater applications. However, the invention also provides advantages for gland valve repair more generally.

In the drawings, the opening which is formed in the gland plate is shown adjacent one of the bolts. In practice, it is preferred to drill the opening at 90 degrees to the locations of the gland plate bolts, so that there is a minimum of weakening introduced into the gland wings (the parts of the gland plate where the bolt holes are provided). The invention will however work with the opening provided at any position around the gland.

The valve design has been shown in schematic form only, and in particular the gland plate has been shown as a flat plate. It may instead have alignment features for providing uniform seal compression and positioning.

Various modifications will be apparent to those skilled in the art.

## Claims

1. A method of repairing a gland valve which comprises a gland plate which covers a gland provided around a valve spindle, with the gland housed in a gland chamber, the method comprising:
locating a template over the gland plate, the template having an alignment bore;
using the alignment bore to create an opening in the gland plate; and
pumping a sealant through the opening and into the gland chamber; and
closing the opening.

2. A method as claimed in claim 1, wherein creating an opening comprises:
drilling a pilot hole using the alignment bore to determine the location and direction of the pilot hole;
drilling the opening using the pilot hole as a guide.

3. A method as claimed in claim 2, wherein creating an opening further comprises tapping the opening to form a threaded opening.

4. A method as claimed in claim 3, wherein pumping a sealant comprises fitting a pump nozzle to the threaded opening.

5. A method as claimed in claim 3 or 4, wherein closing the opening comprises screwing a plug into the opening.

6. A method as claimed in any preceding claim, wherein locating the template over the gland plate comprises clamping the template around the spindle.

7. A method as claimed in any preceding claim, wherein creating an opening in the gland plate comprising drilling partially into the gland.

8. A method as claimed in any preceding claim, wherein the sealant comprises PTFE.

9. A gland valve repair system for a gland valve which comprises a gland plate which covers a gland provided around a valve spindle, the system comprising:
a template having an alignment bore;
means for positioning the template with respect to the gland plate;
a drill fitting for creating an opening in the gland plate through the template alignment bore;
a sealant pumping arrangement; and
a closure for the opening.

10. A system as claimed in claim 9, wherein the drill fitting comprises
a pilot hole drill fitting; and
a larger diameter tapping drill fitting.

11. A system as claimed in claim 10, wherein the sealant pumping arrangement comprises a pump nozzle adapted to fit to the threaded opening of the self-tapping drill fitting.

12. A system as claimed in claim 10 or 11, wherein the closure comprises a screw threaded plug for the opening.

13. A system as claimed in any one of claims 9 to 12, wherein the means for positioning comprises a locating arrangement for clamping the template around the spindle.

14. A system as claimed in any one of claims 9 to 13, further comprising a PTFE sealant.
